# EUROPÄISCHE PATENTANMELDUNG

(11) **EP 3 361 211 A1**
(43) Veröffentlichungstag der Anmeldung: **15.08.2018**
(21) Anmeldenummer: 17020054.7
(22) Anmeldetag: 10.02.2017
(51) Int. Cl.: G01B 11/16, B21D 26/00, F16C 1/00

(54) **ÜBERWACHUNG DES KALTRECKENS EINES DRUCKBEHÄLTERS MITTELS DIGITALER BILDKORRELATION**

(71) Anmelder: Linde Aktiengesellschaft, 80331 München (DE)
(72) Erfinder: Felbinger, Stefan, 84539 Ampfing (DE)
(74) Vertreter: Meilinger, Claudia Sabine

(57) **Zusammenfassung**

Die Erfindung betrifft Verfahren zur Überwachung des Kaltreckens eines Druckbehälters (1), wobei zum Kaltrecken des Druckbehälters ein Innendruck in einem Innenraum (I) des Druckbehälters (1) bereitgestellt wird, so dass der Druckbehälter gedehnt wird, wobei eine Vielzahl an momentanen lokalen Oberflächendehnungen eines Oberflächenbereiches (OB) des Druckbehälters (1) beim Kaltrecken mittels digitaler 3D-Bildkorrelation automatisch berechnet wird.

## Beschreibung

Die Erfindung betrifft ein Verfahren zur Überwachung des Kaltreckens eines Druckbehälters mittels digitaler Bildkorrelation.

Druckbehälter kommen in diversen technischen Gebieten zum Einsatz, insbesondere als Tanks zur Aufnahme von verflüssigten tiefsiedenden Gasen wie Stickstoff, verflüssigtem Erdgas, Sauerstoff oder Argon.

Material und Wandstärke derartiger Druckbehälter müssen einerseits aus Sicherheitsgründen so ausgelegt sein, dass der Druckbehälter einem höheren als dem vorgesehenen Betriebsdruck standhält, andererseits sollte die Wandstärke so gering wie möglich gehalten werden, um Materialkosten zu sparen und ein möglichst geringes Gewicht des Druckbehälters zu erreichen.

Aus dem Stand der Technik ist eine "Kaltrecken" bezeichnete Methode bekannt, die z.B. in den Normen EN 13458-2:2002 (D) (insbesondere Anhang C) oder ASME VIII Div. 1 App. 44 normiert ist und bei der die Festigkeit von metallischen Werkstoffen, deren Streckgrenze einen ausreichenden Abstand zur Bruchgrenze aufweist, durch Zugspannung erhöht wird. Mittels dieser Methode kann insbesondere eine geringere Wandstärke bei gleichbleibender Festigkeit erreicht werden.

Eine entsprechende Methode zum Kaltrecken eines Druckbehälters ist in dem Dokument DE3603415A1 beschrieben. Bei dem beschriebenen Verfahren wird durch Einleiten einer Flüssigkeit in den Innenraum des Druckbehälters ein Innendruck erzeugt, wodurch sich insbesondere die Böden des Druckbehälters plastisch verformen.

Zur Überwachung eines derartigen Verfahrens ist eine Messung der Ausdehnung des Druckbehälters während der gesamten Zeit des Kaltreckens (bis zu vier Stunden) vorteilhaft. Hierdurch können insbesondere auftretende Fehlstellen des Materials erfasst werden.

Nach dem Stand der Technik wird die Ausdehnung des Druckbehälters in der Regel über den gesamten Umfang gemessen. Durch diese integrale Methode können insbesondere die Unstetigkeiten (konstruktiv bedingt oder durch Materialfehlstellen) im Behältermantel nicht erfasst werden.

Daher ergibt sich die Aufgabe, ein effektives, effizientes, kostengünstiges und automatisierbares Verfahren zur Überwachung des Kaltreckens eines Druckbehälters zur Verfügung zu stellen.

Diese Aufgabe wird durch ein Verfahren mit den Merkmalen des Anspruchs 1 gelöst. Vorteilhafte Ausführungsformen des Verfahrens sind in den Unteransprüchen angegeben und werden im Folgenden beschrieben.

Gemäß Anspruch 1 wird bei dem Verfahren zur Überwachung des Kaltreckens eines Druckbehälters ein Innendruck in einem Innenraum des Druckbehälters bereitgestellt, so dass der Druckbehälter kaltgereckt bzw. gedehnt wird, wobei eine Vielzahl an momentanen lokalen Oberflächendehnungen eines Oberflächenbereiches des Druckbehälters beim Kaltrecken mittels digitaler 3D-Bildkorrelation automatisch berechnet werden. Hierbei wird insbesondere eine Abfolge bzw. Zeitreihe der momentanen lokalen Oberflächendehnungen des Oberflächenbereiches gemessen, so dass sich insbesondere ein vollständiges Bild der beim Kaltrecken einstellenden Oberflächendehnungen ergibt, insbesondere in Echtzeit.

Bei einer lokalen Oberflächendehnung kann es sich im Sinne der Erfindung insbesondere um eine Oberflächendehnung des Druckbehälters an einem definierten Punkt x, y, z der Oberfläche des Druckbehälters bzw. in einer kleinen Umgebung eines solchen Punktes handeln, die auch als Facette bezeichnet wird und z.B. durch die Auflösung des Verfahrens begrenzt sein kann.

Grundsätzlich kann des Weiteren eine lokale Oberflächendehnung im Rahmen der vorliegenden Erfindung z.B. so definiert werden, dass stets zumindest zwei Punkte (von einer insbesondere weitaus größeren Anzahl von überwachten Punktepaaren) auf der Behälteraußenfläche bzw. des besagten Oberflächenbereiches betrachtet werden, deren Abstand zueinander sich während des Kaltreckens um ein Differenzbetrag insbesondere stetig erhöht.

Entsprechend ist gemäß einer Ausführungsform des erfindungsgemäßen Verfahrens vorgesehen, dass die jeweilige berechnete momentane Oberflächendehnung gleich dem momentanen Abstand a(t) oder proportional zum momentanen Abstand a(t) zweier Punkte des Oberflächenbereiches ist, wobei
(a) der Abstand (a(t=0)) der Punkte vor dem Kaltrecken (zu einem Zeitpunkt t=0) insbesondere mittels der digitalen Bildkorrelation bestimmt wird,
(b) während des Kaltreckens der momentane Abstand a(t) der Punkte wiederholt zu einer Zeit t mittels der digitalen 3D-Bildkorrelation berechnet wird, und
(c) das Kaltrecken beendet wird, wenn ein momentaner Abstand a(t) oder eine daraus abgeleitete Größe einen vordefinierten Schwellenwert überschreitet, oder wenn der jeweilige momentane Abstand a(t) oder eine jeweils daraus abgeleitete Größe einen jeweils vordefinierten Schwellenwert überschreitet.

Zur Überprüfung des Schwellwertes kann z.B. die Differenz a(t)-a(t=0) oder die normierte Differenz (a(t)-a(t=0))/a(t=0) betrachtet werden. Wenn eine solchermaßen aus dem Abstand a(t) abgeleitete Größe den vorher festgelegten Schwellenwert überschreitet, wird das Kaltrecken abgebrochen.

Die lokale Oberflächendehnung an einem Punkt des Oberflächenbereiches kann auch als Abstand a(t) zwischen diesem Punkt P vor dem Kaltrecken und dem entsprechenden Punkt P' des durch Kaltrecken deformierten Oberflächenbereiches definiert sein. Wird eine Vielzahl solcher Punkte betrachtet, ergibt sich ein Verschiebungsvektorfeld d(x, y, z, t), wobei x, y, z die Koordinaten des Punktes P des Oberflächenbereiches vor dem Kaltrecken sind und der jeweilige Vektor d von diesem Punkt P zu demjenigen Punkt P' zeigt, der durch Kaltrecken aus dem Ausgangspunkt P hervorgegangen ist. Der besagte Abstand ist dann a(x,y,z,t)=|**d**(x,y,z,t)|.

Der Betrag a (oder eine daraus abgeleitete Größe) eines oder mehrerer solcher Verschiebungsvektoren d kann dann mit einem zuvor definierten Schwellenwert (siehe auch oben) verglichen werden, wobei das Kaltrecken wiederum abgebrochen wird, wenn der Schwellenwert überschritten wird.

Gemäß einer Ausführungsform des erfindungsgemäßen Verfahrens ist hier die jeweilige berechnete momentane Oberflächendehnung gleich dem momentanen Abstand a(t) oder proportional zum momentanen Abstand a(t) zwischen einem Punkt P=(x, y, z) des Oberflächenbereiches vor dem Kaltrecken und dem durch Kaltrecken aus diesem Punkt P hervorgehenden Punkt P'=(x', y', z') des Oberflächenbereiches, (a) wobei während des Kaltreckens dieser momentane Abstand a(t) mittels der digitalen 3D-Bildkorrelation wiederholt zu einer Zeit t berechnet wird, und (c) das Kaltrecken beendet wird, wenn ein momentaner Abstand a(t) oder eine daraus abgeleitete Größe einen vordefinierten Schwellenwert überschreitet, oder wenn der jeweilige momentane Abstand a(t) oder eine jeweils daraus abgeleitete Größe einen jeweils vordefinierten Schwellenwert überschreitet.

Grundsätzlich können alternativ zu den obigen Definition auch andere dem Fachmann geeignet erscheinende Definition für die Oberflächendehnung verwendet werden. Ein kaltzureckender Druckbehälter kann insbesondere zur Aufnahme von verflüssigten Gasen wie z.B. Stickstoff, verflüssigtem Erdgas, Sauerstoff oder Argon bestimmt sein. Üblicherweise werden derartige Druckbehälter aus Metall gefertigt und weisen einen zumindest näherungsweise hohlzylinderförmigen Mantel, sowie zwei den Mantel abschließende Böden auf, wobei die Böden z.B. die Form von Kugelsegmenten aufweisen. Die Böden werden üblicherweise mit dem Mantel verschweißt, um einen druckdichten Innenraum des Druckbehälters zu erhalten.

Um den Materialbedarf bei gleichbleibender Druckstabilität zu verkleinern, werden solche Druckbehälter dem besagten Kaltreckverfahren ausgesetzt, wobei sich insbesondere Mantel und Böden des Druckbehälters ausdehnen. Ein solches Kaltrecken wird beispielsweise durch Erzeugung eines Innendrucks in dem Druckbehälter mittels des Einleitens einer Flüssigkeit in den Innenraum des Druckbehälters erreicht. Gemäß der Erfindung kann dabei die Ausdehnung des Druckbehälters insbesondere global sowie lokal mittels der 3D-Bildkorrelation erfasst werden.

Insbesondere wird bei der besagten dreidimensionalen (3D) digitalen Bildkorrelation mittels zumindest einer ersten und einer zweiten Kamera (bzw. mittels einer Stereokamera) jeweils eine Zeitserie von Bildern eines zufälliges Musters auf dem Oberflächenbereich des Druckbehälters beim Kaltrecken aufgenommen. Bei dem Muster handelt es sich insbesondere um ein Punktemuster, das auch als Specklemuster bezeichnet wird. Es besteht hierbei auch die Möglichkeit eine natürliche Oberflächenstruktur des Druckbehälters zu verwenden, soweit diese eine Zufälligkeit bzw. Unregelmäßigkeit aufweist, die es erlaubt, hinreichende Korrelationen zwischen den jeweiligen beiden Bildern der beiden Kameras aufzufinden. Bei dem 3D-Bildkorrelationsverfahren werden des Weiteren insbesondere mittels Korrelation von zu gleichen Zeitpunkten erfassten Bildern der beiden Kameras des Oberflächenbereiches die 3D-Koordinaten eines Stereobildes des Oberflächenbereiches zum jeweiligen Zeitpunkt berechnet, wobei hiernach durch zeitliche Korrelation dieser Stereobilder die momentanen lokalen Oberflächendehnungen des Oberflächenbereiches automatisch berechenbar sind. Diese Berechnungen können durch einen geeigneten Rechner, auf dem eine entsprechende 3D-Bildkorrelations-Software installiert ist, ausgeführt werden. Der Rechner wird hierzu mit den beiden Kameras verbunden, so dass die Bilder in den Rechner eingespeist werden können.

Bei den vorstehenden Berechnungen können die Abstände der Kameras zum Oberflächenbereich, die Blickrichtungen der Kameras sowie der Abstand der Kameras zueinander als bekannt angenommen werden.

Gemäß einer Ausführungsform des erfindungsgemäßen Verfahrens ist vorgesehen, dass der besagte Oberflächenbereich, der durch die Kameras betrachtet bzw. erfasst wird, einen oder mehrere oder alle der folgenden Bereiche der äußeren Oberfläche des Druckbehälters aufweist:
- eine Oberfläche bzw. einen Oberflächenabschnitt eines Stutzens,
- eine Oberfläche bzw. einen Oberflächenabschnitt einer Schweißnaht des Druckbehälters (die Schweißnaht kann z.B. einen Boden mit einem Mantel des Druckbehälters verbinden oder einen Stutzen mit einem Boden des Druckbehälters),
- einen Oberflächenübergang des Druckbehälters,
- einen Oberflächenübergang des Druckbehälters zwischen einer Oberfläche eines Mantels und einer Oberfläche eines Bodens des Druckbehälters,
- einen Oberflächenübergang zwischen einer Oberfläche eines Stutzens und einer Oberfläche eines Bodens des Druckbehälters,
- einen Oberflächenübergang zwischen einer Oberfläche eines Stutzens und einer Oberfläche eines Mantels des Druckbehälters.

Insbesondere an diesen Stellen bzw. Übergängen treten beim Kaltrecken häufig Spannungen des Druckbehälters auf, so dass eine umfassende Überwachung der lokalen Dehnung an derartigen Bereichen von Vorteil ist und ein genaues Kaltrecken ermöglicht.

Weiterhin besteht bei dem erfindungsgemäßen Verfahren auch die Möglichkeit, dass mit einem Kamerapaar prinzipiell eine gesamte Seite bzw. Oberflächenhälfte des Druckbehälters überwachbar ist. Es können insbesondere natürlich auch mehr als ein Kamerapaar eingesetzt werden, so dass insbesondere die gesamte Oberfläche des Druckbehälters beim Kaltrecken überwachbar ist.

Insbesondere erlaubt die Erfindung in vorteilhafter Weise das Definieren von lokalen Abbruchkriterien für das Kaltrecken.

Bevorzugt wird hierbei insbesondere eine lokale Oberflächendehnung betrachtet, die in einem der oben genannten Bereiche der Oberfläche des Druckbehälters liegt.

So kann gemäß einer Ausführungsform das Kaltrecken abgebrochen werden, wenn zumindest eine der momentanen, lokalen Oberflächendehnungen einen vordefinierten Schwellenwert überschreitet. Hierbei können natürlich auch an mehreren interessanten Stellen der Oberflächen (siehe oben) die zeitliche Entwicklung von lokalen Oberflächendehnungen betrachtet werden und entsprechende Schwellwerte definiert werden.

Bei dem erfindungsgemäßen Verfahren kann der zum Kaltrecken benötigte Druck z.B. durch Einleiten einer Flüssigkeit, insbesondere Wasser, in den Druckbehälter erzeugt werden. Hierbei kann die Flüssigkeit beispielsweise mittels einer Pumpe in den Druckbehälter gepumpt werden.

Weitere Einzelheiten und Vorteile der Erfindung sollen durch die nachfolgende Figurenbeschreibung eines Ausführungsbeispiels anhand einer Figur erläutert werden. Es zeigt:

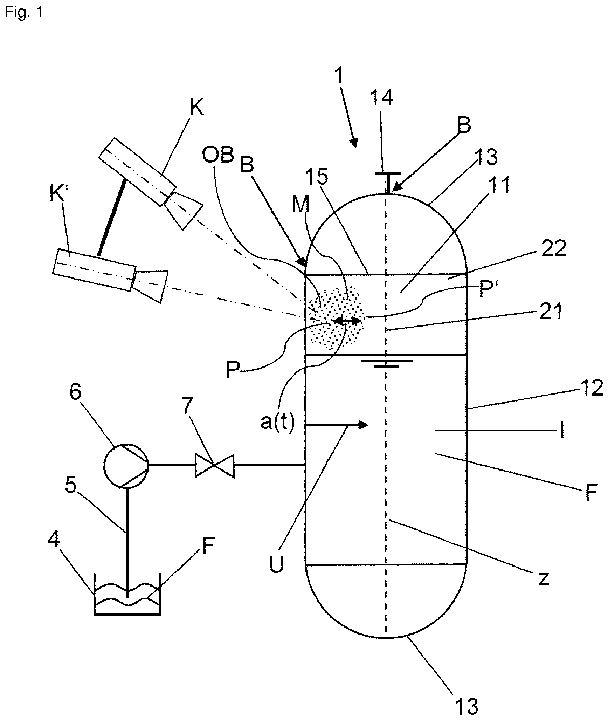

- Fig. 1: eine schematische Darstellung eines Druckbehälters während der Durchführung des erfindungsgemäßen Verfahrens.

Die Figur 1 zeigt einen Druckbehälter 1 aufweisend einen hohlzylinderförmigen Mantel 12, der sich entlang einer z.B. vertikal erstreckten Achse z erstreckt und in einer Umfangsrichtung U umläuft. Der Druckbehälter 1 weist weiterhin zwei den Druckbehälter 1 nach oben und unten hin begrenzende Böden 13 auf, die insbesondere an den Stirnseiten des Mantels 12 angeordnet sind und insbesondere mit dem Mantel 12 verschweißt sind. Dabei sind die Böden 13 gewölbt ausgebildet, insbesondere tiefgewölbt, wobei insbesondere der Kugelradius des betreffenden Bodens gleich dem 0,8-fachen des Manteldurchmessers ist, oder insbesondere flachgewölbt, wobei insbesondere der betreffende Boden einen Kugelradius aufweist, der dem einfachen Manteldurchmesser des Mantels 12 entspricht.

Nach dem erfindungsgemäßen Verfahren zur Überwachung des Kaltreckens des Druckbehälters 1 wird dieser zum Kaltrecken einem Innendruck in einem Innenraum I des Druckbehälters 1 unterworfen, so dass der Druckbehälter 1 gedehnt wird, wobei eine Vielzahl an momentanen lokalen Oberflächendehnungen eines Oberflächenbereiches OB des Druckbehälters 1 beim Kaltrecken mittels digitaler 3D-Bildkorrelation automatisch berechnet werden. Eine momentane lokale Oberflächendehnung kann hierbei z.B. als momentaner Abstand a(t) zweier Punkte P, P' der Druckbehälteraußenfläche bzw. des Oberflächenbereiches OB aufgefasst werden. Diese Größe kann z.B. normiert werden, indem dieser Abstand durch einen Anfangsabstand (zu Beginn der Messung) dividiert wird. Andere geeignete Definitionen für Oberflächendehnungen können ebenfalls verwendet werden (siehe z.B. auch oben). Bei dem Punkt P kann es sich um einen Punkt des Oberflächenbereiches OB vor dem Kaltrecken handeln, wobei der andere Punkt P' durch Kaltrecken und entsprechendes Verformen des Druckbehälters 1 aus dem Punkt P hervorgeht.

Bevorzugt wird bei dem Verfahren mittels einer ersten und einer zweiten Kamera K, K' jeweils eine Zeitserie von Bildern eines zufälliges Musters M, insbesondere eines Punktemusters M, auf dem Oberflächenbereich OB des Druckbehälters 1 beim Kaltrecken aufgenommen. Das Muster M ist der besseren Übersichtlichkeit lediglich bereichsweise auf der Oberfläche des Druckbehälters 1 in der Fig. 1 eingetragen, erstreckt sich aber prinzipiell über den gesamtem Oberflächenbereich OB, der durch die Kameras K, K' erfasst werden soll.

Bei dem Bildkorrelationsverfahren werden in bekannter Weise mittels Korrelation von zu gleichen Zeitpunkten erfassten Bildern der beiden Kameras K, K' des Oberflächenbereiches OB die 3D-Koordinaten x, y, z eines Stereobildes bzw. des Oberflächenbereiches zum jeweiligen Zeitpunkt berechnet, wobei durch zeitliche Korrelation der aufeinander folgenden Stereobilder die momentanen lokalen Oberflächendehnungen des Oberflächenbereiches berechnet werden können, z.B. in Bezug auf einen Referenzzustand (z.B. ein Stereobild bzw. die 3D-Koordinaten des Oberflächenbereiches OB im ungedehnten Zustand, z.B. unmittelbar vor dem Kaltrecken).

Wie in der Fig. 1 angedeutet, kann der zu überwachende Oberflächenbereich OB der Oberfläche des Druckbehälters 1 einen oder mehrere oder alle der folgenden Bereiche B der Oberfläche des Druckbehälters 1 aufweisen: eine Oberflächenabschnitt eines Stutzens 14, eine Oberfläche einer Schweißnaht 15 des Druckbehälters 1, einen Oberflächenübergang des Druckbehälters 1 zwischen einer Oberfläche des Mantels 12 und einer Oberfläche des Bodens 13 des Druckbehälters 1, oder einen Oberflächenübergang zwischen einer Oberfläche des Stutzens 14 und einer Oberfläche des angrenzenden Bodens 13 des Druckbehälters 1.

Je nach Aufstellung und Ausbildung der Kameras K, K' kann der Oberflächenbereich OB auch eine vollständige Oberflächenhälfte des Druckbehälters 1 umfassen (also bis zur Querschnittsebene, in der die Längsachse z liegt).

Bevorzugt wird das Kaltrecken gemäß einer Ausführungsform abgebrochen, wenn zumindest eine der momentanen, lokalen Oberflächendehnungen, die wie vorstehend beschrieben vorzugsweise in Echtzeit beim Kaltrecken berechnet werden, einen vordefinierten Schwellenwert überschreitet.

Die Figur 1 zeigt schließlich weiterhin eine Möglichkeit zur Bereitstellung des zum Kaltrecken notwendigen Innendrucks. Hierzu ist ein mit einer Flüssigkeit F, insbesondere Wasser, gefüllter Flüssigkeitsbehälter 4, vorgesehen, der über eine Leitung 5 mit dem Druckbehälter 1 in Strömungsverbindung gebracht werden kann, so dass mittels einer Pumpe 6 das Innenvolumen bzw. der Innenraum I des Druckbehälters 1 mit der Flüssigkeit F gefüllt werden kann. Die Strömungsverbindung zwischen der Pumpe 6 und dem Druckbehälter 1 ist mittels des Ventils 7 verschließbar.

Mittels der Pumpe 6 kann insbesondere über die in dem Druckbehälter 1 befindliche Flüssigkeit F ein Innendruck in dem Druckbehälter 1 erzeugt werden, wodurch insbesondere ein Kaltrecken des Druckbehälters 1, also eine plastische Verformung des Mantels 12 und/ oder der Böden 13 des Druckbehälters 1 hervorgerufen wird.

**Bezugszeichenliste**

| | |
|---|---|
| 1 | Druckbehälter |
| 11 | Außenwand |
| 12 | Mantel |
| 13 | Boden |
| 14 | Stutzen |
| 15 | Schweißnaht |
| 4 | Flüssigkeitsbehälter |
| 5 | Leitung |
| 6 | Pumpe |
| 7 | Ventil |
| F | Flüssigkeit |
| z | Achse |
| U | Umfangsrichtung |
| I | Innenraum |
| B | Bereich |
| OB | Oberflächenbereich |
| K, K' | Kameras |
| M | Muster |
| P, P' | Punkte |
| a(t) | Abstand Punkte |

## Patentansprüche

1. Verfahren zur Überwachung des Kaltreckens eines Druckbehälters (1), wobei zum Kaltrecken des Druckbehälters ein Innendruck in einem Innenraum (I) des Druckbehälters (1) bereitgestellt wird, so dass der Druckbehälter (1) gedehnt wird, wobei eine Vielzahl an momentanen lokalen Oberflächendehnungen eines Oberflächenbereiches (OB) des Druckbehälters (1) beim Kaltrecken mittels digitaler 3D-Bildkorrelation automatisch berechnet wird.

2. Verfahren nach Anspruch 1, **wobei** bei der 3D-Bildkorrelation mittels zumindest einer ersten und einer zweiten Kamera (K, K') jeweils eine Zeitserie von Bildern eines zufälligen Musters (M) auf dem Oberflächenbereich (OB) des Druckbehälters (1) beim Kaltrecken aufgenommen wird, wobei mittels Korrelation von zu gleichen Zeitpunkten erfassten Bildern der beiden Kameras (K, K') des Oberflächenbereiches (OB) die 3D-Koordinaten eines Stereobildes des Oberflächenbereiches (OB) zum jeweiligen Zeitpunkt berechnet werden, und wobei durch zeitliche Korrelation dieser Stereobilder die momentanen lokalen Oberflächendehnungen des Oberflächenbereiches (OB) berechnet werden.

3. Verfahren nach Anspruch 1 oder 2, **wobei** der Oberflächenbereich (OB) einen oder mehrere oder alle der folgenden Bereiche (B) der Oberfläche des Druckbehälters (1) aufweist:
- eine Oberfläche eines Stutzens (14),
- eine Oberfläche einer Schweißnaht (15) des Druckbehälters (1),
- einen Oberflächenübergang des Druckbehälters (1),
- einen Oberflächenübergang des Druckbehälters (1) zwischen einer Oberfläche eines Mantels (12) und einer Oberfläche eines Bodens (13) des Druckbehälters (1),
- einen Oberflächenübergang zwischen einer Oberfläche eines Stutzens (14) und einer Oberfläche eines Bodens (13) des Druckbehälters (1),
- einen Oberflächenübergang zwischen einer Oberfläche eines Stutzens (14) und einer Oberfläche eines Mantels (12) des Druckbehälters (1).

4. Verfahren nach einem der vorhergehenden Ansprüche, **wobei** der besagte Oberflächenbereich (OB) einer vollständigen Oberflächenhälfte des Druckbehälters (1) entspricht oder diese umfasst.

5. Verfahren nach einem der vorhergehenden Ansprüche, **wobei** das Kaltrecken abgebrochen wird, wenn zumindest eine der momentanen, lokalen Oberflächendehnungen einen vordefinierten Schwellenwert überschreitet.

6. Verfahren nach den Ansprüchen 3 und 5, **wobei** die besagte mindestens eine Oberflächendehnung in einem der besagten Bereiche (B) liegt.

7. Verfahren nach einem der vorhergehenden Ansprüche, **wobei** die jeweilige berechnete momentane Oberflächendehnung gleich dem momentanen Abstand (a(t)) oder proportional zum momentanen Abstand (a(t)) zweier Punkte des Oberflächenbereiches (OB) ist, wobei
(a) der Abstand (a(t=0)) der beiden Punkte vor dem Kaltrecken bestimmt wird,
(b) während des Kaltreckens der momentane Abstand der beiden Punkte mittels der digitalen 3D-Bildkorrelation berechnet wird, und
(c) das Kaltrecken beendet wird, wenn ein momentaner Abstand (a(t)) oder eine daraus abgeleitete Größe einen vordefinierten Schwellenwert überschreitet, oder wenn der jeweilige momentane Abstand (a(t)) oder eine jeweils daraus abgeleitete Größe einen jeweils vordefinierten Schwellenwert überschreitet.
